# EUROPÄISCHE PATENTSCHRIFT

(11) **EP 0 990 801 B1**
(45) Veröffentlichungstag und Bekanntmachung des Hinweises auf die Patenterteilung: **25.02.2004**
(21) Anmeldenummer: 98810982.3
(22) Anmeldetag: 30.09.1998
(51) Int. Cl.: F04F 5/04, F04F 5/02, F04F 5/08, F02C 3/00

(54) **Verfahren zur isothermen Kompression von Luft sowie Düsenanordnung zur Durchführung des Verfahrens**
Method for isothermal compression of air and nozzle arrangement for carrying out the method
Méthode de compression isothermique d' air et tuyère pour la mise en oeuvre du procédé

(43) Veröffentlichungstag der Anmeldung: 05.04.2000
(73) Patentinhaber: ALSTOM Technology Ltd, 5400 Baden (CH)
(72) Erfinder: Keller, Jakob, Prof. Dr., 5610 Wohlen (CH)

(56) Entgegenhaltungen:
- EP-A- 0 477 845
- FR-A- 519 857
- GB-A- 391 619
- US-A- 3 796 045
- US-A- 4 379 679
- US-A- 4 797 563
- US-A- 5 083 429
- US-A- 5 099 648
- US-A- 5 537 813
- BIDINI G ET AL: "THERMODYNAMIC ANALYSIS OF HYDRAULIC AIR COMPRESSOR-GAS TURBINE POWER PLANTS" PROCEEDINGS OF THE INSTITUTION OF MECHANICAL ENGINEERS, Bd. 211, Nr. 5, 1997, Seiten 429-437, XP002062308

## Beschreibung

### Technisches Gebiet

Die Erfindung bezieht sich auf ein Verfahren zur isothermen Kompression von Luft, gemäss den Ansprüchen 1 und 7. Ferner wird eine Düsenanordnung gemäss dem Anspruch 10 beschrieben.

### Stand der Technik

Zur Energiegewinnung wird in der US-Druckschrift US 4 797 563 vorgeschlagen, eine Gasturbine mit isotherm vorverdichteter Luft zu versorgen, die entlang einer Gefällstrecke, die als horizontaler Fallschacht ausgebildet ist, als Flüssigkeit-Luft-Gemisch mittels Erdanziehungskraft beschleunigt und in einer sich am unteren Ende des Fallschachtes anschließenden Druckkammer komprimiert wird, wo sich die Luft von der Flüssigkeit wieder separiert. Die auf diese Weise komprimierte Luft wird nachfolgend der Brennkammer einer Gasturbine zugeführt, innerhalb der die auf niedrigem Temperaturniveau befindliche hochverdichtete Luft mit Brennstoff vermengt und zur Zündung gebracht wird. Hauptvorteil der isothermen Kompression ist zum einen der Wegfall konventioneller Verdichterstufen, die von der Gasturbine angetrieben werden und auf diese Weise eine Wirkungsgradeinbuße der gesamten Gasturbinenanlage bedeuten, zum anderen vermag die auf relativ niedrigem Temperaturniveau befindliche vorverdichtete Luft die mit dieser in thermischen Kontakt tretenden Anlagenkomponenten erheblich weniger thermisch zu belasten, wodurch geringere Anforderungen an die einzelnen Anlagenkomponenten gestellt werden müssen.

Das an sich bekannte Prinzip der isothermen Kompression, wie es aus der vorstehend beschriebenen US-Druckschrift US 4 797 563 hervorgeht, ist eine interessante und zukunftsweisende Möglichkeit, Luft in vorverdichteter Form Gasturbinenanlagen zur Verfügung zu stellen, so daß es gilt, diese Technik zu optimieren. Insbesondere soll der Wirkungsgrad derartiger Verdichteranordnungen erhöht werden, um auf diese Weise den Gesamtwirkungsgrad insbesondere von Gasturbinenantagen, zu verbessern.

US-A-5,537,813 offenbart ein Verfahren zum Verdichten von Luft. Bei diesen Verfahren wird Wasser versprüht und gleichzeitig mit Luft durch einen Turm geleitet. Dadurch, dass der Wassernebel eine grössere Geschwindigkeit als die eintretende Luft aufweist, wird die Luft komprimiert.

Auch US-A-5,083,429 offenbart ein Verfahren zum Verdichten von Luft. Bei diesem Verfahren zu Wasser in einen Kompressionsrohr zerstäubt und mit Luft durch das Rohr geleitet. Durch gezielte Wärmeab- und zufuhr und eine Schockwelle, die die Geschwindigkeit der Strömung von einer Überschallströmung zu einer Unterschallströmung reduziert, wird die Luft verdichtet.

US-A-3,796,045 offenbart einen Gasturbinenprozess, in welchem die Kompressorluft vor dem Eintritt in den Kompressor gekühlt wird.

US-A-5,099,648 offenbart eine Anlage, in der die Luft vor Eintritt in die Brennkammer Wasser mitzieht und auf diese Weise verdichtet wird.

### Darstellung der Erfindung

Der Erfindung liegt die Aufgabe zugrunde, ein Verfahren zur isothermen Kompression von Luft, bei dem eine druckbeaufschlagte Flüssigkeit, vorzugsweise Wasser, mittels einer Zerstäubungseinrichtung zerstäubt wird und zusammen mit der Luft ein Flüssigkeits-Luft-Gemisch bildet, das zur Verdichtung in eine Düsenanordnung eingeleitet wird, in der die kinetische Energie des Flüssigkeits-Luft-Gemisches zum größten Teil durch Druckanstieg der Luft in Kompressionsenergie umgewandelt wird, derart weiterzubilden, daß zum einen der Verdichtungswirkungsgrad gesteigert word und die hierfür erforderlichen Anlagenkomponenten möglichst kostengünstig und kompakt, d.h. in möglichst kleiner Bauform, realisiert werden. Überdies werden die für die Durchführung des angestrebten Verfahrens erforderlichen Anlagenkomponenten, insbesondere die zur Erzeugung eines Flüssigkeits-Luft-Gemisches notwendige Zerstäubungseinrichtung, sowie die für die Verdichtung vorgesehene Düsenanordnung im Hinblick auf die angestrebte Optimierung des Verdichtungswirkungsgrades worteilhaft, modifiziert.

Die Lösung der der Erfindung zugrundeliegenden Aufgabe ist in den Ansprüchen 1 und 7 angegeben. Sie beschreiben jeweils alternative erfindungsgemäße Verfahrensvarianten. Anspruch 10 beschreibt eine erfindungsgemäß ausgebildete Düsenanordnung. Den Erfindungsgedanken vorteilhaft ausbildende Merkmale sind Gegenstand der Unteransprüche.

Aufbauend auf einer Vielzahl von im Erfindungsvorfeld durchgeführten Experimenten liegt der Erfindung die Erkenntnis zugrunde, daß durch gezielte Einstellung des Flüssigkeits-Luft-Gemisches hinsichtlich Tröpfchengröße bzw. Blasengrösse und -geschwindigkeit, entscheidend Einfluß auf den Verdichtungswirkungsgrad, der mit einer Verdichteranordnung, beispielsweise mit einer Laval-Düse, genommen werden kann.

Erfindungsgemäß ist ein Verfahren gemäß dem Anspruch 1 derart ausgebildet, daß das Flüssigkeits-Luft-Gemisch mit einer Geschwindigkeit größer als die Schallgeschwindigkeit in die Düsenanordnung eingebracht wird, innerhalb der sie vom transsonischen Bereich in den Unterschallbereich abgebremst wird und zugleich ein gewünschter Druckanstieg erfolgt. Die Zerstäubung der Flüssigkeit vor Eintritt in die Düsenanordnung erfolgt innerhalb der Zerstäubungseinrichtung derart, daß Flüssigkeitströpfchen innerhalb des Flüssigkeits-Luft-Gemisches gebildet werden, deren Tröpfchendurchmesser ca. 200 µm und kleiner sind. Zur Bildung des möglichst homogenen Flüssigkeits-Luft-Gemisches ist erkannt worden, daß der Zerstäubungseinrichtung der zu zerstäubende Flüssigkeitsstrom unter hohem Druck zugeführt werden muß, so daß die aus der Zerstäubungseinrichtung austretende Flüssigkeit eine Austrittsgeschwindigkeit von etwa 100 bis 200 m/sec beträgt. Bei zunehmendem Druck und/oder zunehmendem Volumenanteil Flüssigkeit geht die Tröpfchenwolke in eine blasenhaltige Flüssigkeit über. Weil sich die Relativgeschwindigkeit der beiden Phasen nach diesem Übergang wegen des erhöhten Widerstandes gegen Relativbewegung stark verringert, ist die Feinheit des Gemisches nur in der Anfangsphase der Tröpfchenwolke besonders wichtig.

Erfindungsgemäß ist erkannt worden, daß durch eine Flüssigkeitszerstäubung mit den vorstehend genannten hohen Austrittsgeschwindigkeiten und einer Flüssigkeitströpfchenbildung mit möglichst kleinen Tröpfchendurchmessern ein Flüssigkeits-Luft-Gemisch gebildet wird, das bei Durchtritt durch eine Laval-Düse eine deutlich bessere Verdichtung erfährt, als es bei Flüssigkeits-Luft-Gemischen mit geringeren Strömungsgeschwindigkeiten und größeren Tröpfchendurchmessern, gemäß dem bisher bekannten Stand der Technik, der Fall ist. So kann in Abhängigkeit von der Qualität und von der Effizienz des Zerstäubungsvorganges entscheidend Einfluß auf die für die Verdichtung erforderliche Baulänge der Laval-Düse genommen werden. Auf eine einfache Formel gebracht, kann festgestellt werden, daß, je homogener ein Flüssigkeits-Luft-Gemisch, bestehend aus Flüssigkeitströpfchen mit möglichst kleinem Tröpfchendurchmesser, ausgebildet ist und je größer die Strömungsgeschwindigkeit des Gemisches ist, um so kürzer kann die Länge der Laval-Düse ausgebildet werden. So hat eine Vielzahl von Strömungsuntersuchungen gezeigt, daß die Abbremswirkung des in die Laval-Düse eintretenden Flüssigkeits-Luft-Gemisches in der ersten Hälfte der gesamten Baulänge der Laval-Düse am größten ist, sofern das Flüssigkeits-Luft-Gemisch mit hoher Geschwindigkeit, möglichst homogener Tröpfchenverteilung, sowie mit Tröpfchen sehr kleinen Durchmessers die Laval-Düse passieren. Auf diese Erkenntnis aufbauend kann die Bauform von Laval-Düsen erheblich reduziert werden.

Um den Zerstäubungsgrad der Zerstäubereinrichtung zu erhöhen, d.h. die Flüssigkeitströpfchendurchmesser zu reduzieren und die Tröpfchenverteilung innerhalb des sich ausbildenden Flüssigkeits-Luft-Gemisches möglichst homogen einzustellen, ist es besonders vorteilhaft, wenn die der Zerstäubereinrichtung zugeführte, mit hohem Druck beaufschlagte Flüssigkeit eine Temperatur aufweist, die unter den, beim Zerstäubungsvorgang vorherrschenden Druckbedingungen knapp über der Verdampfungstemperatur der Flüssigkeit liegt. Hierdurch ist gewährleistet, daß neben der Zerstäubungswirkung, die durch die Zerstäubungseinrichtung hervorgerufen wird, die Flüssigkeitströpfchen nach Durchtritt durch die Zerstäuberdüse zusätzlich einem Verdampfungsprozeß unterliegen, der zur weiteren Reduzierung des Tröpfchendurchmessers beiträgt. Eine kurzzeitige Überschreitung des Siedepunktes führt zu besonders kleinen Tröpfchen. Allerdings hängt es sehr stark vom Gesamtprozess der Kraftwerksanlage ab, ob diese Wahl der Zerstäubungstemperatur aus thermodynamischer Sicht in Frage kommt.

Eine weitere Möglichkeit, den Zerstäubungsvorgang zu optimieren, ist die Beimischung einer zweiten Flüssigkeit zu der zu zerstäubenden Flüssigkeit noch vor Durchtritt durch die Zerstäubereinrichtung. Die zweite Flüssigkeit ist dabei unter den Druck- und Temperaturbedingungen vor der Zerstäubung derart der zu zerstäubenden Flüssigkeit beizumengen, so daß der Tripelpunkt der zweiten Flüssigkeit nicht überschritten wird. Vorzugsweise ist als zweite, beizumischende Flüssigkeit verflüssigtes CO₂ geeignet, das bei Druckbedingungen > 10, vorzugsweise > 70 bar und Temperaturen unter 35° C in der flüssigen Phase vorliegt. Nach Durchtritt der Flüssigkeitsmischung durch die Zerstäubungseinrichtung fällt der Druck schlagartig aufgrund der Expansion ab, wodurch der Tripelpunkt überschritten wird und die zweite Flüssigkeit in ihre gasförmige Phase sublimiert. Hierdurch erfährt das zerstäubte Flüssigkeits-Luft-Gemisch neben der durch die Zerstäubungseinrichtung hervorgerufene Zerstäubungswirkung ein weiteres Aufplatzen jeder einzelnen Flüssigkeitstropfen in kleinere Tröpfchen. So ergeben sich die gewünschten Tröpfchendurchmesser von < 200 µm ergeben.

Eine besonders vorteilhafte Kombination dieser Verdichtungstechnik mit dem Betrieb von Gasturbinenanlagen ermöglicht es, die beim Verbrennungsprozeß der Gasturbinenanlagen entstehenden Verbrennungsgase, insbesondere Kohlendioxyd, in der vorstehend beschriebenen Weise in die zu zerstäubende Flüssigkeit vor Durchtritt durch die Zerstäubungseinrichtung beizumengen, wodurch der Wirkungsgrad der gesamten Gasturbinenanlage entscheidend gesteigert werden kann.

Ebenso ist erfindungsgemäß erkannt worden, daß eine deutliche Umsetzung der kinetischen Energie, die in dem durch die Zerstäubungseinrichtung unter hohem Druck und großer Geschwindigkeit hindurchtretenden Flüssigkeits-Luft-Gemisch enthalten ist, in eine Druckerhöhung der komprimierbaren Luft erfolgt, sofern das Flüssigkeits-Luft-Gemisch von schaumartiger Konsistenz ist, d.h. Luftblasen aufweist, die von Flüssigkeit eingeschlossen sind. Das aus der Zerstäubungseinrichtung austretende schaumartige Flüssigkeits-Luft-Gemisch tritt mit Überschallgeschwindigkeit in die Laval-Düse ein, in der das Gemisch auf relativ kurzem Wege entlang der Laval-Düse auf Geschwindigkeiten in den Unterschallbereich abgebremst wird. So eignen sich Luftblasen mit einem Blasendurchmesser von bis zu 25 mm für den Durchtritt durch eine Laval-Düse, in der die mit Überschallgeschwindigkeit eintretenden Luftblasen innerhalb der ersten wenigen Meter der Laval-Düse auf Unterschallgeschwindigkeit abgebremst werden und in diesem Bereich am effektivsten verdichtet werden. So erfolgt innerhalb der ersten 2 bis 3 Meter der Laval-Düse nahezu die gesamte Energiekonversion der kinetischen Energie des Flüssigkeits-Luft-Gemisches in Druckarbeit. Nach Erreichen von Geschwindigkeiten unterhalb der Schallgeschwindigkeit vermag die Laval-Düse nur noch mit geringer Wirkung das Gemisch zu komprimieren, weshalb sich eine Verkürzung der gesamten Laval-Düsenanordnung anbietet.

Für die Erzeugung eines Flüssigkeits-Gas-Gemisches in Form der vorstehend genannten beiden Alternativen, also der Bildung eines Aerosols, bestehend aus homogen verteilten kleinsten Flüssigkeitströpfchen, sowie die Ausbildung eines schaumartigen Gemisches, in dem Luftblasen von Flüssigkeit eingeschlossen ist, ist eine Düsenanordnung erfindungsgemäß dadurch ausgebifdet, daß wenigstens eine Ringdüse vorgesehen oder konzentrisch um eine zentrale Düse wenigstens eine Ringdüse angeordnet ist, die von der zentralen Düse beabstandet ist. Ferner sind die zentrale Düse sowie die Ringdüse über wenigstens einen radialen Verbindungskanal zum Austausch eines Stoffstromes miteinander verbunden.

Im Falle der Erzeugung eines Flüssigkeits-Luft-Gemisches, das aus feinst verteilten Flüssigkeitströpfchen besteht, wird der zentralen Düse sowie der Ringdüse über eine entsprechende Zuleitung Flüssigkeit unter hohem Druck zugeführt, die sich mit der durch den Zwischenraum zwischen zentraler Düse und Ringdüse zugeführten Luft weitgehend homogen in Form kleinster Flüssigkeitstropfen vermischt.

Im Falle der Erzeugung eines schaumartigen Gemisches, in dem Luftblasen von der Flüssigkeit eingeschlossen werden, wird der zentralen Düse sowie der Ringdüse über eine entsprechende Zuleitung Zuluft zugeführt, die durch die entsprechenden Düsenöffnungen austritt. In diesem Falle wird die zentrale Düse sowie die Ringdüse von Flüssigkeit umspült, so daß sich Luftbläschen innerhalb der zugeführten, die Düsenanordnung umspülenden Flüssigkeit ausbilden. Je nach Größe des Bereiches des zu erzeugenden Flüssigkeits-Luft-Gemisches werden eine Vielzahl von Ringdüsen in konzentrischer Anordnung um die zentrale Düse vorgesehen. Der Flächenbereich, der von der Düsenanordnung abgedeckt wird, entspricht in der Regel der Eintrittsöffnung der Laval-Düse, in der das Flüssigkeits-Luft-Gemisch gezielt abgebremst wird.

Insbesondere bei der Abbremsung des vorstehend erwähnten schaumartigen Flüssigkeits-Luft-Gemisches sieht die Laval-Düse im Bereich ihres engsten Strömungsinnendurchmesser eine Bypaß-Öffnung vor, deren Öffnungsweite regelbar ist und durch die ein Teil des schaumartig ausgebildeten Flüssigkeits-Luft-Gemisches entweichen kann. Hierdurch kann das mit Überschall in die Laval-Düse eindringende Gemisch kontrollierter abgebremst werden. Die Bypass-Öffnung dient als Anfahrhilfe. Damit kann sichergestellt werden, dass vor der Lavaldüse sich tatsächlich eine Überschallströmung einstellt.

Ferner ist es für eine verbesserte Kompression der sich innerhalb der Laval-Düse nach Unterschreiten der Schallgeschwindigkeit ausbreitenden Luftblasen von Vorteil, wenn im Bereich des engsten Düsendurchmessers eine Entlüftungsventilanordnung vorgesehen ist, die den statischen Druck innerhalb der Laval-Düse beeinflußt. Auch diese Massnahme ist als Anfahrhilfe zu verstehen. Es soll sichergestellt werden, dass die Strömung nach dem Engnis nicht wieder in eine Überschallströmung übergeht.
Diese Massnahmen sind vergleichbar mit den Massnahmen, die bei der Inbetriebnahme eines Überschallkanals beachtet werden müssen.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnung exemplarisch beschrieben. Es zeigen:
- Fig. 1: schematisierte Darstellung einer Gasturbinenanlage mit vorgeschalteter isothermer Kompression,
- Fig. 2 a), b): tabellarische Übersicht über physikalische Betriebsparamter für die Zerstäubung von Wasser in einer Zerstäubungseinrichtung für den Fall zweier unterschiedlicher Strömungsgeschwindigkeiten des Wassers beim Austritt aus der Zerstä bungseinrichtung mit 100 m pro Sekunde (Fall a) und 150 pro Sekunde (Fall b),
- Fig. 3a,b,c,d: Gegenüberstellung von physikalischen Meßgrößen für die in Fig. 2a, b durchgeführten Zerstäubungen mit unterschie lichen Austrittsgeschwindigkeiten
- Fig. 4: Zerstäubungseinrichtung zur Erzeugung eines Flüssigkeits Luft-Gemisches bestehend aus Flüssigkeitströpfchen,
- Fig. 5: Verschaltungsvariante beim Betrieb einer Gasturbinenanla ge,
- Fig. 6: Zerstäubungseinrichtung zur Erzeugung eines Flüssigkeits-Luft-Gemisches, das aus einem schaumartigen Gemisch besteht,
- Fig. 7: tabellarische Zusammenstellung physikalischer Betriebsparameter für den Vorgang der Zerstäubung zur Erzeugung eines schaumartigen Gemisches,
- Fig. 8a bis d: graphische Darstellung physikalischer Funktionsverläufe, die bei der Durchführung der Zerstäubung mit den Betriebsparametern gemäß Fig. 7 gewonnen wurden,
- Fig. 9a, b: Ausführungsbeispiele für eine Laval-Düse zur Komprimierung eines schaumartigen Gemisches, sowie
- Fig. 10: weiteres Ausführungsbeispiel für eine Zerstäubungseinrichtung zur Erzeugung eines schaumartigen Gemisches.

### Wege zur Ausführung und gewerbliche Anwendbarkeit

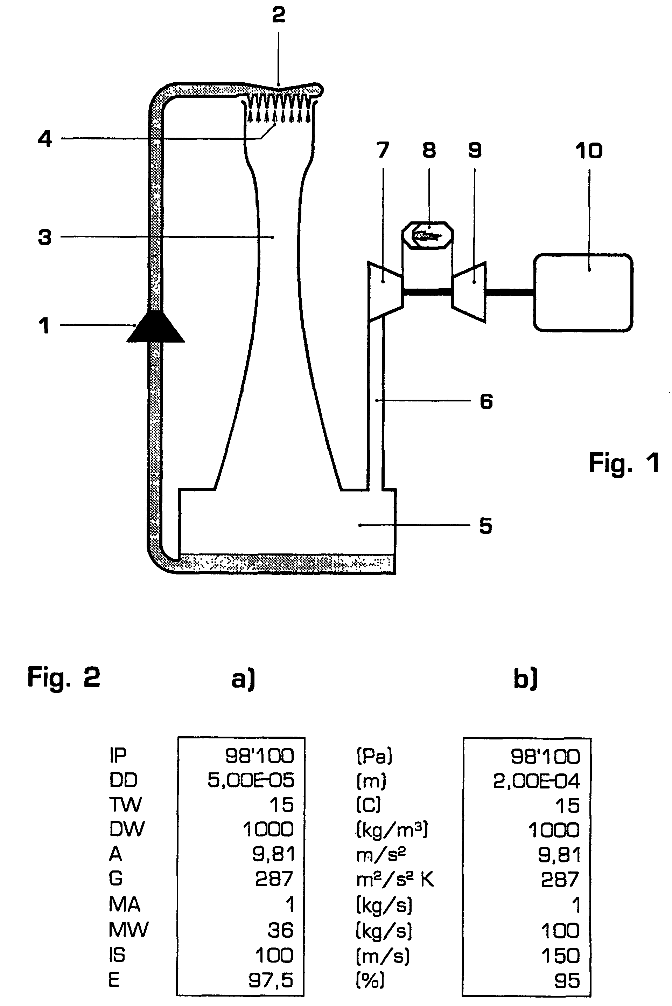

In Fig. 1 ist eine Gasturbinenanlage schematisiert dargestellt, die sich zur Vorverdichtung der isothermen Kompression bedient. Wasser, das entweder aus einem hochgelegenen Wasserreservoir oder wie im dargestellten Beispiel gemäß der Fig. 1 mittels einer Wasserpumpe 1 druckbeaufschlagt einer Zerstäubungseinrichtung 2 zugeführt wird, wird mit Hilfe geeigneter Auslaßdüsen der Zerstäubungseinrichtung 2 im Düseneinlaßbereich einer Laval-Düse 3 zu einem Flüssigkeits-Luft-Gemisch 4 zerstäubt, in dem feinst verteilt kleine Flüssigkeitströpfchen enthalten sind. Die im Ausführungsbeispiel gemäß Fig. 1 dargestellte Laval-Düse 3 ist als vertikal angeordneter Fallschacht ausgebildet, durch den das Flüssigkeits-Luft-Gemisch 4 durch die Erdanziehungskraft vertikal nach unten beschleunigt, hinabfällt. Durch die sich verjüngende Innenkontur der Laval-Düse 3 wird den vertikal nach unten fallenden Flüssigkeitströpfchen kinetische Energie entzogen, wodurch die im Flüssigkeits-Luft-Gemisch 4 enthaltene Luft komprimiert wird. Die Laval-Düse 3 ist stromabwärts mit einer Hochdruckkammer 5 verbunden, in der sich die hochkomprimierte Luft von der Flüssigkeit separiert. Über eine entsprechende Hochdruckzuleitung 6 wird die isotherm vorverdichtete Luft einer weiteren Verdichterstufe 7 zugeführt, die nachfolgend mit einer Brennkammer 8 verbunden ist, in der die vorverdichtete Luft vermischt mit Brennstoff entzündet wird. Die in der Brennkammer expandierenden Heißgase treiben die Turbine 9 an, die ihrerseits mit einem Generator 10 zur Stromerzeugung verbunden ist.

Grundsätzlich ist festzuhalten, daß die für die Kompression erforderliche Länge der Laval-Düse 3 nicht von der Leistung der Gasturbine abhängt, sondern sehr stark von der Zerstäubungsqualität, mit der die Zerstäubungseinrichtung 2 die Flüssigkeit in feinst verteilte Flüssigkeitströpfchen zerstäubt. Ebenso hängt die Laval-Düsenlänge vom Düsenwirkungsgrad sowie vom Druckverhältnis ab, mit dem die zu zerstäubende Flüssigkeit der Zerstäubungseinrichtung 2 zugeführt wird. So nimmt die Länge der Laval-Düsenanordnung mit abnehmendem Tröpfchendurchmesser oder abnehmendem Kompressionswirkungsgrad ab. Typische Düsenlängen bei mässiger Zerstäubungsqualität betragen ca. 20 m, wohingegen Düsenlängen bei hoher Zerstäubungsqualität auf 6 bis 10 m verkürzt werden können. Bei Verwendung einer Gasturbine, deren Luftmassendurchfluß bei ca. 400 kg pro Sekunde liegt, betragen typische Eintrittsdüsenöffnungen bei Laval-Düsen ca. 2 m und Austrittsdurchmesser etwa 3 m. Grundsätzlich ist es auch möglich, Gasturbinen, Dampfturbinen, sowie Abgasrekuperatoren zusammen mit der isothermen Kompression zu kombinieren. Ferner ist festzuhalten, daß die Verwendung der isothermen Kompression zu einem deutlichen Anstieg der Leistungsdicht, sowie des Wirkungsgrades von Gasturbinen, verglichen mit einstufig gekühlten Systemen, führt.

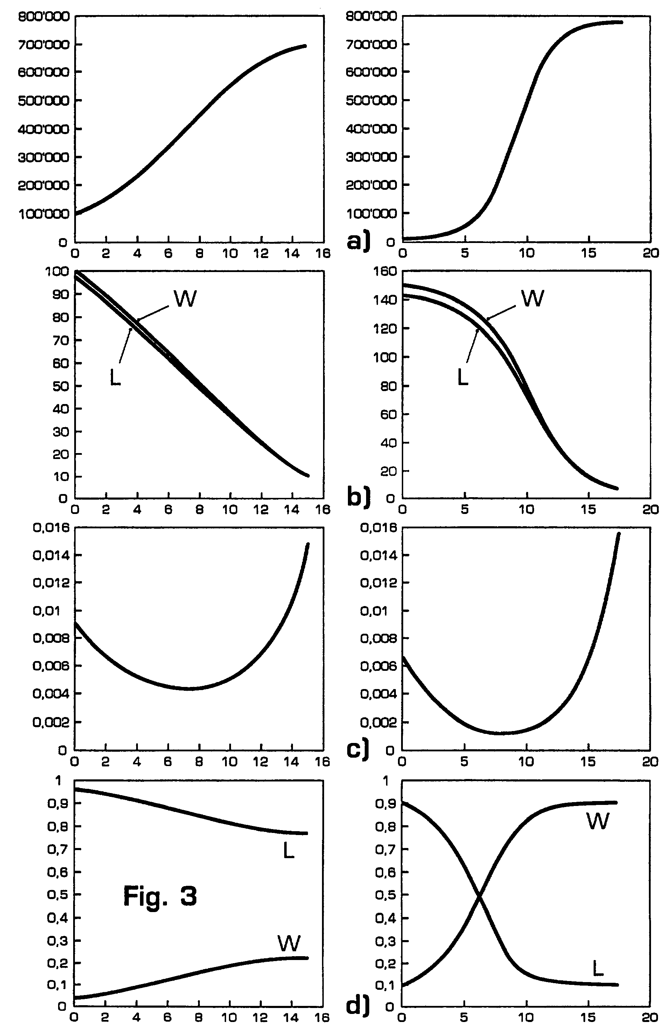

Die Tabelle in Fig. 2 soll in Verbindung mit den Diagrammen den Figuren 3a bis 3d physikalische Abhängigkeiten verdeutlichen, mit denen es möglich ist, Zerstäubungseinrichtungen zu optimieren. In der Fig. 2 a und b sind Eingangsparameter aufgelistet, die jeweils zwei getrennten Betriebsbedingungen entsprechen, unter denen jeweils eine Zerstäubungseinrichtung betrieben worden ist. Die nachfolgenden Parameterabkürzungen sollen folgenden Betriebsparametern entsprechen:

| | |
|---|---|
| IP | Druck in Pascal, mit dem die Flüssigkeit der Zerstäubungseinrichtung zugeführt wird |
| DD | Tröpfchendurchmesser, die mit der Zerstäubungseinrichtung erzeugbar sind |
| TW | Wassertemperatur in Grad C |
| DW | Dichte des Wassers in kg/m³ |
| A | Erdbeschleunigung in Meter durch Sekunden im Quadrat |
| G | Gaskonstante von Luft |
| MA | Luftmassenstrom in kg pro Sekunde |
| MW | Wassermassenstrom in kg pro Sekunde |
| lS | Strömungsgeschwindigkeit des Wassers nach Austritt aus der Zerstäubungseinrichtung in Meter pro Sekunde |
| E | Zerstäubungswirkungsgrad |

Die Fälle a und b der Fig. 2 unterscheiden sich im wesentlichen darin, daß im Fall a eine kleinere Wasseraustrittsgeschwindigkeit erreicht wurde, als Fall b. Überdies sieht der Fall b einen größeren Massendurchsatz an Wasser durch die Zerstäubungseinrichtung vor, als es bei a der Fall ist.

Fig. 3 zeigt vier unterschiedliche Diagramme a - d, wobei die Diagramme der linken Spalte der Betriebsweise einer Zerstäubungseinrichtung gemäß den Eingangsparametern der Fig. 2a und die Diagramme der rechten Spalte gemäß Fig. 3 den Eingangsparametern der Tabelle 2b entsprechen. In Fig. 3a ist auf der Abszisse die Höhe der Laval-Düse in Metern aufgetragen, entlang der Ordinate der Druckanstieg in Einheiten von Pascal. In beiden Fällen nimmt der Druck mit zunehmender Laval-Düsenlänge zu. Insbesondere ist der rechten Diagrammdarstellung der Fig. 3b zu entnehmen, daß trotz größerem Tröpfchendurchmesser keine wesentliche Einbuße in der Kompressionswirkung innerhalb der Laval-Düse zu verzeichnen ist. Die an sich negative Auswirkung des größeren Tröpfchendurchmessers in diesem Falle wird hier im wesentlichen durch den wesentlich größeren Massendurchsatz an Wasser durch die Laval-Düse kompensiert.

Fig. 3b zeigt die Abnahme der Geschwindigkeit sowohl des Wasser- als auch Luftanteils entlang der Düsenlänge, die auf der Abszisse der Diagramme in Metern aufgetragen ist. Entlang den Diagrammkoordinaten sind die Fließgeschwindigkeiten in Meter pro Sekunde aufgetragen. In beiden Fällen nimmt sowohl die Fließgeschwindigkeit des Wasseranteils (W) sowie des Luftanteils (L) nahezu parallel ab.

In Fig. 3c sind auf den Abszissen ebenso die Höhe der Laval-Düse in Metern aufgetragen, entlang der Ordinaten die Querschnittsfläche durch die Laval-Düse in Quadratmetern. Beide Diagramme stellen die Geometrie der Innenkontur durch die Laval-Düse dar. Es zeigt sich, daß innerhalb der sich verjüngende Eintrittsinnenkontur entlang der ersten 8 m das mit Überschall in die Düse eintretende Flüssigkeits-Luft-Gemisch bis hinab in den Unterschallbereich abgebremst wird. Vergleicht man die geometrische Innenkontur mit der Abnahme der kinetischen Energie der Massenströme durch die Laval-Düse gemäß der Fig. 3b so kann diesem Vergleich entnommen werden, daß die größte Abbremswirkung der Laval-Düse im ersten Drittel der Laval-Düsenlänge erfolgt.

In Fig. 3d ist das Volumenverhältnis zwischen Wasser W und Luft L (aufgetragen entlang der Ordinate) gegenüber der Düsenlänge (aufgetragen auf der Abszisse) dargestellt. In beiden Fällen kann entnommen werden, daß der Volumenanteil des Wassers mit zunehmender Laval-Düsenlänge zunimmt. Bei den Modellrechnungen wurde von einer konstanten Tröpfchengrösse ausgegangen. In Wirklichkeit findet jedoch eine Koagulation von Tröpfchen und bei relativ hohen Volumenanteilen Wasser (> ca.10%) ein Übergang zu einem schaumartigen Gemisch statt. Eine Vergrösserung der Tröpfchen führt vorübergehend zu einem schlechteren Kompressionswirkungsgrad, während der Übergang zu einem schaumartigen Gemisch eine deutliche Erhöhung des Kompressionswirkungsgrades bewirkt. Besonders ist dies ausgeprägt im Falle großer Wassermassendurchtritte durch die Laval-Düse, wie es aus der rechten Spalte gemäß Fig. 3d hervorgeht. So übersteigt der Wasseranteil W bereits nach etwa 6 m den Luftanteil L.

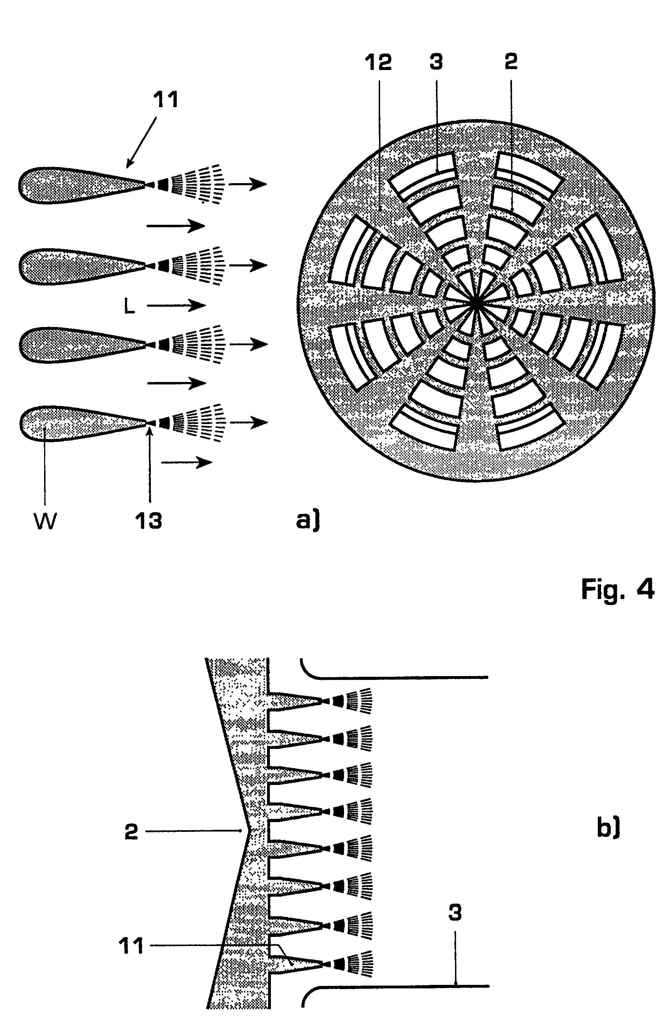

Um eine Wasserzerstäubung von möglichst hoher Qualität zu erreichen, d.h. Wasser zu Wassertröpfchen zu zerstäuben, die möglichst kleine Tröpfchendurchmesser aufweisen und räumlich homogen verteilt sind, ist in Fig. 4 a und b eine bevorzugte Zerstäubungseinrichtung dargestellt, die zur Bildung eines Wasser-Luft-Gemisches, bestehend aus Flüssigkeitströpfchen, geeignet ist. In Fig. 4a rechte Darstellung, ist eine Draufsicht auf die Düsenöffnung der Laval-Düse 3 gezeigt, vor der eine Zerstäubungseinrichtung 2 vorgesehen ist, bestehend aus einer Vielzahl konzentrisch zueinander angeordneter Ringdüsen 11, die jeweils mit Verbindungskanälen 12 miteinander verbunden sind. In der linken Darstellung gemäß Fig. 4a ist eine Querschnittsdarstellung durch die Ringdüsenanordnung dargestellt, die jeweils mit Wasser gespeist wird, das durch die Düsenöffnungen 13 der Ringdüsen 11 austritt.

Zwischen den Ringdüsen 11 tritt Luft L zur Vermischung mit dem aus den Düsenöffnungen 13 austretenden Wasser W hindurch. Fig. 4b zeigt eine Querschnittsdarstellung durch die Anordnung der Zerstäubungseinrichtung 2 relativ zur Öffnung der Laval-Düse 3. Über dem gesamten Querschnitt der Düsenöffnung der Laval-Düse 3 sind Ringdüsen 11 vorgesehen, die einen homogenen Sprühnebel, bestehend aus einzelnen Flüssigkeitströpfchen, bilden.

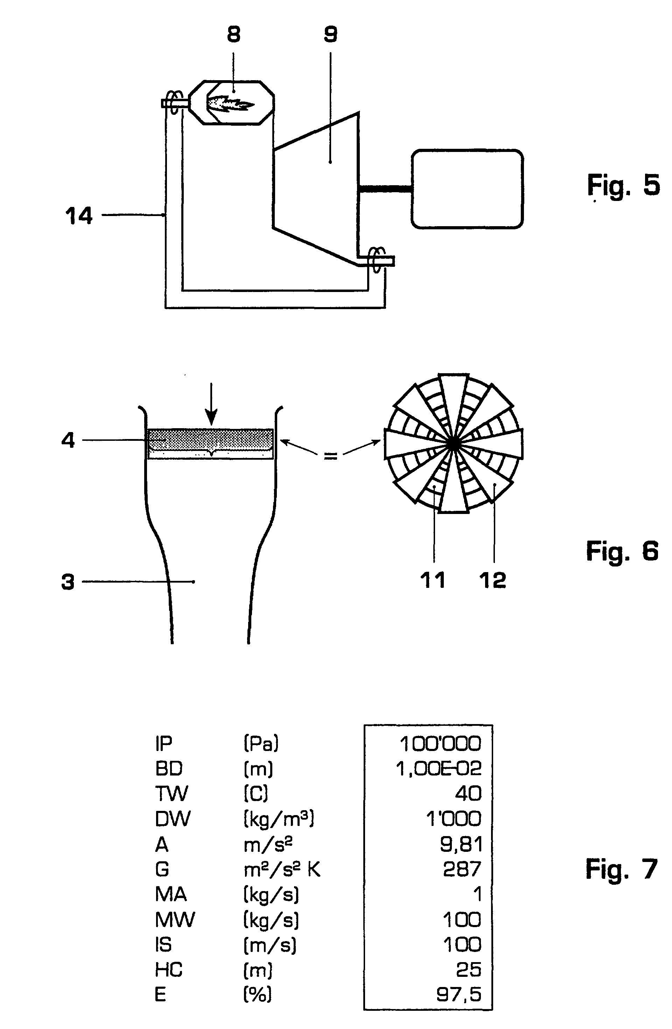

Neben der Zerstäubungswirkung, die durch die Zerstäubungseinrichtung hervorgerufen wird, kann auch der Zerstäubungsgrad derart erhöht werden, indem das Temperaturniveau der zu zerstäubenden Flüssigkeit gerade so eingestellt wird, daß nach Durchtritt durch die Zerstäubungseinrichtung die zerstäubte Flüssigkeit teilweise verdampft. Ebenso kann dem zu zerstäubenden Wasser eine zweite Flüssigkeit vor Durchtritt durch die Zerstäubungseinrichtung beigemengt werden, die bei den gegebenen Druck- und Temperaturbedingungen unterhalb ihres Tripelpunktes liegt, beispielsweise bietet sich hierfür CO₂ an, das bei Temperaturen von 35° C und den vor der Zerstäubungseinrichtung herrschenden hohen Druckverhältnissen in flüssiger Form vorliegt. Nach Durchtritt durch die Zerstäubungseinrichtung überschreitet das flüssige CO₂ seinen Tripelpunkt, wodurch es sublimiert und den Zerstäubungsprozeß des Wassers unterstützt. In besonders geeigneter Weise kann CO₂ dem Abgas nach Durchtritt der Gasturbine 9 entnommen werden (siehe hierzu Fig. 5), das mit Hilfe geeigneter Abgaszuleitungen 14 der zu zerstäubenden Flüssigkeit beigemengt werden kann.

Alternativ zur Zerstäubung von Flüssigkeit in Form von Flüssigkeitströpfchen zeigt Fig. 6 eine Zerstäubungseinrichtung, mit der Luftblasen in Flüssigkeit erzeugt werden, die nachfolgend einer Laval-Düse 3 zugeführt werden. In Fig. 6, rechte Darstellung, ist eine Zerstäubungseinrichtung 4 von weitgehend identischem Aufbau gemäß der Zerstäubungseinrichtung von Fig. 4 dargestellt. Die Zerstäubungseinrichtung 4 gemäß Fig. 6 ist ebenso im Düseneintrittsbereich der Laval-Düse 3 angeordnet. Im Gegensatz zur Zerstäubungseinrichtung gemäß Fig. 4 tritt nun durch die Zerstäubungseinrichtung 4, die sich aus einzelnen Ringdüsen 11 und Verbindungskanälen 12 zusammensetzt, Luft L durch die entsprechenden Düsenöffnungen. Zwischen den einzelnen Ringdüsen 11 tritt nun Wasser W in den Einlaßbereich der Laval-Düse 3, wodurch durch Eindüsen von Luft in Wasser eine Vielzahl von Luftblasen entstehen, die sich als Schaum durch die Laval-Düse 3 mit hoher Geschwindigkeit hindurchbewegen.
Die Frage, ob zunächst eine Tropfenwolke oder direkt ein Schaum entsteht, hängt vom Volumenanteil Wasser und von der auf den Rohrdurchmesser bezogenen "Froude-Zahl" ab. Bei Volumenanteilen Wasser, die grösser als etwa 0,01 sind, bleibt eine Tropfenwolke in gar keinem Fall erhalten.
Eine Übersicht über die Gemischeigenschaften in Abhängigkeit der "Froude-Zahl" und des Volumenanteils Wasser gibt die Arbeit "Regime maps for air water two-phase flow" von P.L.Spedding und Van Thanh Nguyen, Chemical Engineering Science, Vol. 35, pp. 779-793, Pergamon Press Ltd., 1980. Bei den hier betrachteten (relativ hohen) Volumenanteilen Wasser entsteht früher oder später stets ein Schaum oder blasenhaltiges Wasser.

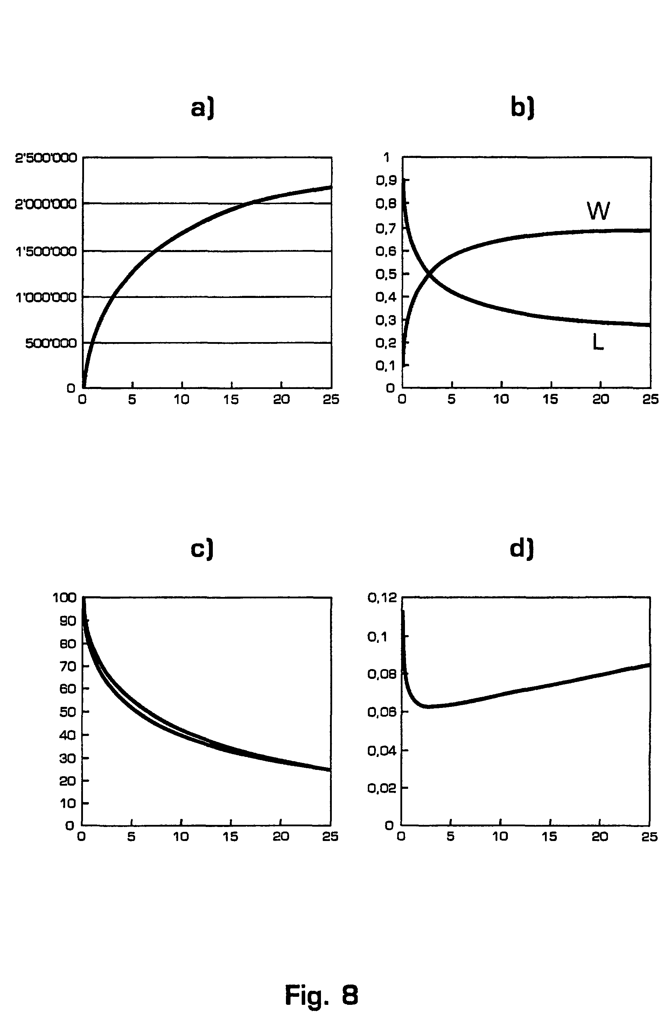

In Fig. 7 sind gleichsam der Fig. 2 Betriebsparameter tabellarisch zusammengestellt, die bei der Zerstäubung von Luft in Wasser typischerweise verwendet werden. Zur Interpretation der Betriebsparameter wird auf die Diagrammverläufe der Fig. 8a bis d verwiesen, die entlang ihrer Abszissen jeweils die Länge der Laval-Düse in Metern vorsehen. In Fig. 8a ist der Druckanstieg in Hektopascal entlang der Ordinate aufgetragen. Fig. 8b zeigt das Massenverhältnis entlang der Laval-Düse zwischen dem Volumenanteil des Wassers W und des der Luft L. Es zeigt sich, daß entlang des Düsendurchtritts der Wasseranteil zunimmt, wohingegen der Luftanteil abnimmt. Bemerkenswert bei der Durchführung isothermer Kompression mit Hilfe von Luftblasen ist, daß die Abbremsung des Wassers- als auch des Luftmassenstromes innerhalb des ersten Drittels der Laval-Düse erfolgt. Dies geht aus dem Diagramm gemäß Fig. 8 c hervor, in dem entlang der Ordinate die Strömungsgeschwindigkeiten beider Phasen aufgetragen ist. Innerhalb der ersten 10 m werden beide Massenströme auf weniger als ihre Hälfte der ursprünglichen kinetischen Energie abgebremst, wodurch ein erheblicher Druckanstieg verbunden ist. Dies macht sich insbesondere in dem Diagramm gemäß Fig. 8d bemerkbar, bei dem entlang der Ordinate der Durchmesser der Lavaldüse aufgetragen ist.

Da der Hauptteil der Verdichtungswirkung bei einer Laval-Düse, durch die ein Flüssigkeits-Luft-Gemisch, bestehend aus Luftblasen, hindurchströmt, innerhalb der ersten wenigen Meter der Laval-Düse erfolgt, kann diese sehr kompakt und kurz ausgeführt werden.

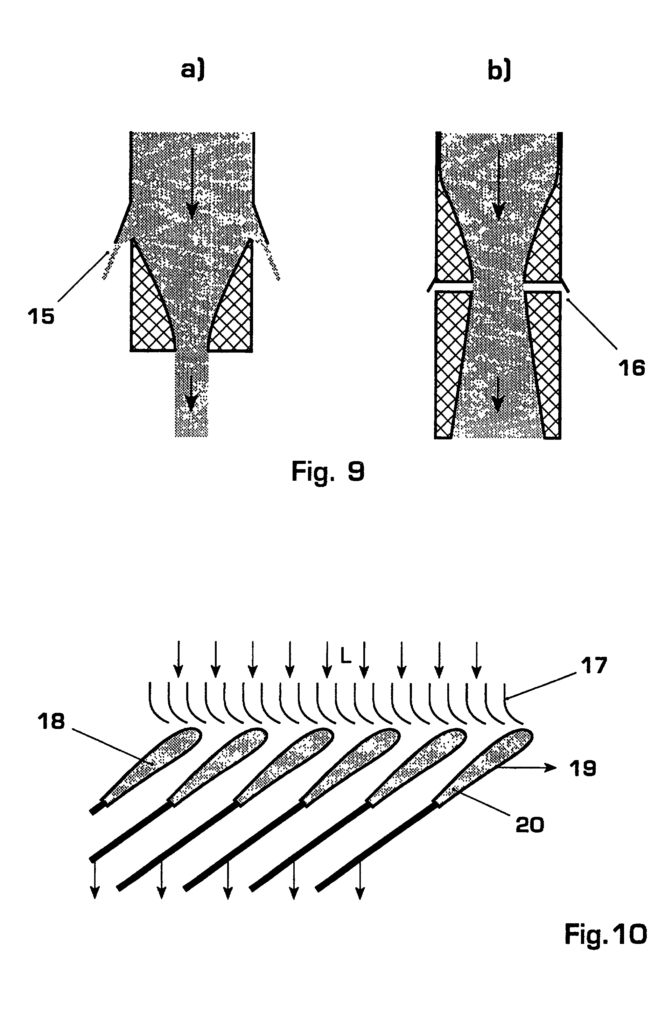

In Fig. 9 a und b sind jeweils Querschnittsdarstellungen durch eine Laval-Düse gezeigt, die zum Durchtritt eines Luftblasengemisches optimiert sind. Eine Bypaß-Öffnung 15 sorgt dafür, die Luftblasenströmung innerhalb der Laval-Düse stabil zu halten. Insbesondere ist Bypaß-Öffnung 15 derart ausgelegt, daß ihre Durchtrittsöffnung im Querschnitt regelbar ist, um den jeweiligen Betriebsbedingungen eine individuell Anpaßmöglichkeit zu geben. Die Bypass-Öffnung 15 dient als Anfahrhilfe und wird geschlossen, sobald im gesamten Bereich vor dem Engnis Überschallgeschwindigkeit herrscht.

Mit Hilfe des Entlüftungsventils 16 kann gezielt ein Übergang vom Überschallbereich in den Unterschallbereich an der engsten Stelle der Laval-Düse 3 eingestellt werden. Insbesondere ist es für die Stabilität des Luftblasengemisches im Unterschallbereich von Vorteil, wenn der statische Druck des Tröpfchengemisches kontrolliert werden kann. So ist man insbesondere bestrebt, am engsten Bereich der Laval-Düse eine Strömungsgeschwindigkeit knapp oberhalb der Schallgeschwindigkeit einzustellen, was durch eine gezielte Korrektur des statischen Drukkes erreicht werden kann. Hierfür sind gemäß Fig. 9b Entlüftungsventile 16 an der engsten Stelle der Laval-Düse 3 vorgesehen, deren Öffnungskanalweite ebenso geregelt werden kann.
Auch das Entlüftungsventil 16 dient in erster Linie als Anfahrhilfe. Bei zu geringem Gegendruck würde die Strömung erneut in den Überschallbereich übergehen und schliesslich mit einer Stosswelle gebremst. Bei zu grossem Gegendruck würde eine Stosswelle bis zum Mischer vordringen und den gesamten Verdichtungsprozess zum Zusammenbruch bringen. Die Entlüftungsventile bieten eine Sicherung gegen das Vordringen von Stosswellen zum Mischer.

Schließlich ist in Fig. 10 eine weitere Ausführungsform für eine Zerstäubungseinrichtung dargestellt, bei der Luft L durch entsprechend geformte Leitbleche 17 durchströmt, die in Strömungsrichtung nach den Luftleitblechen 17 drehbar angeordnete Eulerrotoren 18 in Rotation (siehe Pfeil 19) versetzt. Aus den einzelnen Rotorblättern 20 des Eulerrotors 18, die als Düsen ausgebildet sind, wird Flüssigkeit, vorzugsweise Wasser druckbeaufschlagt nach außen getrieben, das sich lagenweise mit der sich dazwischen einströmenden Luft vermengt. Mit dieser Ausgestaltungsform einer Zerstäubungseinrichtung kann ebenso in höchst effizienter Weise ein Flüssigkeits-Luft-Gemisch erzeugt werden.

### Bezugszeichenliste

- 1: Wasserpumpe
- 2: Zerstäubungseinrichtung
- 3: Laval-Düse
- 4: Flüssigkeits-Luft-Gemisch
- 5: Hochdruckkammer
- 6: Hochdruckzuleitung
- 7: Verdichterstufe
- 8: Brennkammer
- 9: Turbine
- 10: Generator
- 11: Ringdüse
- 12: Verbindungskanal
- 13: Düsenöffnung
- 14: Abgaszuleitung
- 15: Bypaß-Öffnung
- 16: Entlüftungsventil
- 17: Luftleitbleche
- 18: Eulerrotor
- 19: Rotationsrichtung
- 20: Düse
- L: Luft
- W: Wasser

## Patentansprüche

1. Verfahren zur isothermen Kompression von Luft, bei dem
- eine druckbeaufschlagte Flüssigkeit, mittels einer Zerstäubungseinrichtung (2) in Tröpfchen zerstäubt wird und ein Flüssigkeits-Luft-Gemisch (4) mit Flüssigkeitströpfchen, die einen Durchmesser von ca. 200 µm und kleiner aufweisen, gebildet wird,
- das Flüssigkeits-Luft-Gemisch (4) mit einer Geschwindigkeit größer als die Schallgeschwindigkeit in eine Laval-Düse (3) eingebracht wird,
- das Flüssigkeits-Luft-Gemisches (4) in der Laval-Düse (3) auf eine Geschwindigkeit kleiner als die Schallgeschwindigkeit abgebremst wird, wobei die Luft verdichtet wird.

2. Verfahren nach Anspruch 1,
**dadurch gekennzeichnet, dass**
die Flüssigkeit vor Durchtritt durch die Zerstäubungseinrichtung (2) eine Temperatur aufweist, die knapp über der Verdampfungstemperatur der druckbeaufschlagten Flüssigkeit liegt.

3. Verfahren nach Anspruch 1 oder 2,
**dadurch gekennzeichnet, dass**
- die Flüssigkeit vor Durchtritt durch die Zerstäubungseinrichtung (2) mit einer zweiten Flüssigkeit bei einem Druck und einer Temperatur vermengt wird, so daß der Tripelpunkt der zweiten Flüssigkeit nicht überschritten wird, und
- dass nach Durchtritt der Flüssigkeitsmischung durch die Zerstäubungseinrichtung (2) mittels Druckabfall der Tripelpunkt der zweiten Flüssigkeit überschritten wird, wodurch eine Verdampfung der zweiten Flüssigkeit erfolgt.

4. Verfahren nach Anspruch 3,
**dadurch gekennzeichnet, dass**
als zweite Flüssigkeit CO₂ in flüssiger Form verwendet wird.

5. Verfahren nach Anspruch 3 oder 4,
**dadurch gekennzeichnet, dass**
das CO₂ als Abgas aus einem Verbrennungsprozeß gewonnen wird.

6. Verfahren nach einem der Ansprüche 1 bis 5,
**dadurch gekennzeichnet, dass**
die Flüssigkeit mit einem Druck zwischen 10 und 30 bar in die Zerstäubereinheit eingeleitet wird.

7. Verfahren zur isothermen Kompression von Luft, bei dem
- ein Flüssigkeits-Luft-Gemisch (4) mit von Flüssigkeit eingeschlossene Luftblasen gebildet wird,
- das Flüssigkeits-Luft-Gemisch (4) mit einer Geschwindigkeit größer als die Schallgeschwindigkeit in eine Laval-Düse (3) eingebracht wird, und
- das Flüssigkeits-Luft-Gemisches (4) in der Laval-Düse (3) auf eine Geschwindigkeit kleiner als die Schallgeschwindigkeit abgebremst wird, wobei die Luft verdichtet.

8. Verfahren nach Anspruch 7,
**dadurch gekennzeichnet, dass**
die in der Flüssigkeit vorhandenen Luftblasen einen Blasendurchmesser von bis zu 25 mm aufweisen.

9. Verfahren nach einem der Ansprüche 1 bis 8,
**dadurch gekennzeichnet, dass**
als Flüssigkeit Wasser verwendet wird.

10. Düsenanordnung zur Durchführung einer isothermen Kompression nach einem der Ansprüche 1 bis 9, wobei
- die Düsenanordnung eine Zerstäubungseinrichtung und eine der Zerstäubungseinrichtung nachordnete Laval-Düse (3) aufweist,
- die Zerstäubungseinrichtung wenigstens zwei Ringdüsen (11) und/oder eine zentrale Düse und eine Ringdüse (11) vorgesehen sind, so dass zwischen den Ringdüsen (11) bzw. zwischen der zentralen Düse und der Ringdüse (11) ein Abstand besteht,
- die zentrale Düse und/oder die Ringdüsen (11) über wenigstens einen radialen Verbindungskanal (12) zum Austausch eines Stoffstromes verbunden sind, wobei
- mit den Ringdüsen (11) und/oder der zentralen Düse Flüssigkeitstropfen erzeugbar sind, die innerhalb eines sich in der Laval-Düse (3) bildenden Flüssigkeits-Luft-Gemisch (4) einen Durchmesser von ca. 200 µm und kleiner aufweisen.

11. Düsenanordnung nach Anspruch 10,
**dadurch gekennzeichnet, dass**
eine Vielzahl von Ringdüsen (11) in konzentrischer Anordnung zueinander vorgesehen sind, die jeweils mit radial verlaufenden Verbindungskanälen (12) miteinander verbunden sind.

12. Düsenanordnung nach Anspruch 11,
**dadurch gekennzeichnet, dass**
der Querschnitt der Ringdüsenanordnung in etwa dem Eintrittsquerschnitt der 2-Phasen-Laval Düse (3) entspricht.

13. Düsenanordnung nach einem der Ansprüche 10 bis 12,
**dadurch gekennzeichnet, dass**
- zur Erzeugung des Flüssigkeits-Luft-Gemisches (4), das aus Flüssigkeitströpfchen besteht, Flüssigkeit der zentralen Düse und/oder der Ringdüse (11) zuleitbar ist und Luft zwischen der zentralen Düse und der Ringdüse einleitbar ist, und
- wobei zur Erzeugung des Flüssigkeits-Luft-Gemisches (4), das von Flüssigkeit eingeschlossene Luftblasen aufweist, Luft der zentralen Düse sowie der Ringdüse (11) zuleitbar ist und Flüssigkeit zwischen der zentralen Düse und der Ringdüse (11) einleitbar ist.

14. Düsenanordnung nach einem der Ansprüche 10 bis 13,
**dadurch gekennzeichnet, dass**
- der Laval-Düse (3) ein Strömungskanal vorgeordnet ist, und
- zwischen Strömungskanal und Laval-Düse (3) eine Bypass-Öffnung (15) vorgesehen ist.

15. Düsenanordnung nach Anspruch 14,
**dadurch gekennzeichnet, dass**
die Bypass-Öffnung (15) als Ringkanal ausgebildet ist, der die Öffnung der Laval-Düse (3) umgibt.

16. Düsenanordnung nach Anspruch 14 oder 15,
**dadurch gekennzeichnet, dass**
die Bypaß-Öffnung (15) regelbar verschließbar ist.

17. Düsenanordnung nach einem der Ansprüche 10 bis 16,
**dadurch gekennzeichnet, dass**
an der engsten Strömungsquerschnittstelle der Laval-Düse (3) eine Entlüftungsventilanordnung (16) vorgesehen ist, die den statischen Druck innerhalb des die Laval-Düse (3) durchströmenden Flüssigkeits-Luft-Gemisch (4) an dieser Stelle der Laval-Düse beeinflusst.

## Claims

1. Method for the isothermal compression of air, in which
- a pressurized liquid is atomized into droplets by means of an atomization device (2), and a liquid-air mixture (4) with liquid droplets which have a diameter of approx. 200 µm and below is formed,
- the liquid-air mixture (4) is introduced into a Laval nozzle (3) at a velocity which is greater than the speed of sound,
- the liquid-air mixture (4) is decelerated in the Laval nozzle (3) to a velocity which is lower than the speed of sound, with the air being compressed in the process.

2. Method according to Claim 1, **characterized in that** the liquid, before passing through the atomization device (2) is at a temperature which is just 'above the evaporation temperature of the pressurized liquid.

3. Method according to Claim 1 or 2, **characterized in that**
- the liquid, before passing through the atomization device (2), is mixed with a second liquid at a pressure and a temperature such that the triple point of the second liquid is not exceeded, and
- **in that**, after the liquid mixture has passed through the atomization device (2), the triple point of the second liquid is exceeded by means of a pressure drop, with the result that the second liquid evaporates.

4. Method according to Claim 3, **characterized in that** CO₂ in liquid form is used as the second liquid.

5. Method according to Claim 3 or 4, **characterized in that** the CO₂ is obtained from off-gas from a combustion process.

6. Method according to one of Claims 1 to 5, **characterized in that** the liquid is introduced into the atomizer unit at a pressure of between 10 and 30 bar.

7. Method for the isothermal compression of air, in which
- a liquid-air mixture (4) with air bubbles enclosed by liquid is formed,
- the liquid-air mixture (4) is introduced into a Laval nozzle (3) at a velocity which is greater than the speed of sound, and
- the liquid-air mixture (4) is decelerated in the Laval nozzle (3) to a velocity which is lower than the speed of sound, with the air being compressed in the process.

8. Method according to Claim 7, **characterized in that** the diameter of the air bubbles which are present in the liquid is up to 25 mm.

9. Method according to one of Claims 1 to 8, **characterized in that** water is used as the liquid.

10. Nozzle arrangement for carrying out an isothermal compression as described in one of Claims 1 to 9, in which
- the nozzle arrangement includes an atomization device and a Laval nozzle (3) arranged downstream of the atomization device,
- the atomization device at least two annular nozzles (11) and/or one central nozzle and one annular nozzle (11) are provided [sic], so that there is a distance between the annular nozzles (11) or between the central nozzle and the annular nozzle (11),
- the central nozzle and/or the annular nozzles (11) are connected via at least one radial connection passage (12) in order to exchange a stream of matter, and in which
- the annular nozzles (11) and/or the central noz.zle can be used to produce drops of liquid which have a diameter of approx. 200 µm and below within a liquid-air mixture (4) which forms in the Laval nozzle (3).

11. Nozzle arrangement according to Claim 10, **characterized in that** a multiplicity of annular nozzles (11) are provided concentrically with respect to one another, each being connected to one another by means of radial connection passages (12).

12. Nozzle arrangement according to Claim 11, **characterized in that** the cross section of the annular-nozzle arrangement approximately corresponds to the entry cross-section of the two-phase Laval nozzle (3).

13. Nozzle arrangement according to one of Claims 10 to 12, **characterized in that**,
- in order to produce the liquid-air mixture (4) which comprises liquid droplets, liquid can be fed to the central nozzle and/or to the annular nozzle (11), and air can be introduced between the central nozzle and the annular nozzle, and
- in which, in order to produce the liquid-air mixture (4) which contains air bubbles surrounded by liquid, air can be fed to the central nozzle and to the annular nozzle (11) and liquid can be introduced between the central nozzle and the annular nozzle (11).

14. Nozzle arrangement according to one of Claims 10 to 13, **characterized in that**
- a flow passage is arranged upstream of the Laval nozzle (3), and
- a bypass opening (15) is provided between flow passage and Laval nozzle (3).

15. Nozzle arrangement according to Claim 14, **characterized in that** the bypass opening (15) is designed as an annular passage which surrounds the opening of the Laval nozzle (3).

16. Nozzle arrangement according to Claim 14 or 15, **characterized in that** the bypass opening (15) can be controllably closed.

17. Nozzle arrangement according to one of Claims 10 to 16, **characterized in that** a bleed-valve arrangement (16) is provided at the narrowest point of the cross-section of flow of the Laval nozzle (3), which valve arrangement, at this point of the Laval nozzle, has an effect on the static pressure within the liquid-air mixture (4) flowing through the Laval nozzle (3).

## Revendications

1. Procédé pour la compression isotherme d'air, dans lequel
- on pulvérise en gouttelettes un liquide sous pression au moyen d'un dispositif de pulvérisation (2) et on forme un mélange liquide-air (4) avec des gouttelettes de liquide qui présentent un diamètre d'environ 200 µm et en dessous,
- on introduit le mélange liquide-air (4) dans une tuyère de Laval (3) avec une vitesse supérieure à la vitesse du son,
- on ralentit le mélange liquide-air (4) dans la tuyère de Laval (3) à une vitesse qui est inférieure à la vitesse du son, l'air étant ainsi comprimé.

2. Procédé selon la revendication 1, **caractérisé en ce que** le liquide présente, avant son passage à travers le dispositif de pulvérisation (2), une température qui se situe juste au-dessus de la température de vaporisation du liquide sous pression.

3. Procédé selon la revendication 1 ou 2, **caractérisé en ce que**
- on mélange le liquide, avant son passage à travers le dispositif de pulvérisation (2), avec un deuxième liquide à une pression et.une température telles que le point triple du deuxième liquide ne soit pas dépassé, et
- après le passage du mélange liquide à travers le dispositif de pulvérisation (2), le point triple du deuxième liquide est dépassé par suite d'une baisse de la pression, provoquant ainsi une évaporation du deuxième liquide.

4. Procédé selon la revendication 3, **caractérisé en ce que** l'on utilise comme deuxième liquide du CO₂ sous forme liquide.

5. Procédé selon la revendication 3 ou 4, **caractérisé en ce que** le CO₂ est obtenu comme gaz d'échappement d'un processus de combustion.

6. Procédé selon l'une quelconque des revendications 1 à 5, **caractérisé en ce que** l'on introduit le liquide avec une pression comprise entre 10 et 30 bar dans l'unité de pulvérisation.

7. Procédé pour la compression isotherme d'air, dans lequel
- on forme un mélange liquide-air (4) avec des bulles d'air entourées de liquide,
- on introduit le mélange liquide-air (4) dans une tuyère de Laval (3) avec une vitesse supérieure à la vitesse du son, et
- on ralentit le mélange liquide-air (4) dans la tuyère de Laval (3) à une vitesse inférieure à la vitesse du son, l'air étant ainsi comprimé.

8. Procédé selon la revendication 7, **caractérisé en ce que** les bulles d'air présentes dans le liquide présentent un diamètre de bulle allant jusqu'à 25 mm.

9. Procédé selon l'une quelconque des revendications 1 à 8, **caractérisé en ce que** l'on utilise l'eau comme liquide.

10. Dispositif à tuyère pour l'exécution d'une compression isotherme selon l'une quelconque des revendications 1 à 9, dans lequel
- le dispositif à tuyère présente un dispositif de pulvérisation et une tuyère de Laval (3) disposée après le dispositif de pulvérisation,
- il est prévu le dispositif de pulvérisation, au moins deux tuyères annulaires (11) et/ou une tuyère centrale et une tuyère annulaire (11), de telle façon qu'il existe une distance entre les tuyères annulaires (11) respectivement entre la tuyère centrale et la tuyère annulaire (11),
- la tuyère centrale et/ou les tuyères annulaires (11) sont reliées par au moins un canal de liaison radial (12) pour l'échange d'un courant de matières, dans lequel
- avec les tuyères annulaires (11) et/ou la tuyère centrale, on peut produire des gouttes de liquide qui présentent un diamètre d'environ 200 µm et en dessous au sein d'un mélange liquide-air (4) se formant dans la tuyère de Laval (3).

11. Dispositif à tuyère selon la revendication 10, **caractérisé en ce qu'**il est prévu une pluralité de tuyères annulaires (11) en une disposition concentrique l'une par rapport à l'autre, qui sont chaque fois reliées les unes aux autres par des canaux de liaison orientés radialement (12).

12. Dispositif à tuyère selon la revendication 11, **caractérisé en ce que** la section transversale de la disposition de tuyères annulaires correspond sensiblement à la section d'entrée de la tuyère de Laval à 2 phases (3).

13. Dispositif à tuyère selon l'une quelconque des revendications 10 à 12, **caractérisé en ce que**
- pour produire le mélange liquide-air (4), qui se compose de gouttelettes de liquides, le liquide peut être fourni à la tuyère centrale et/ou à la tuyère annulaire (11) et l'air peut être introduit entre la tuyère centrale et la tuyère annulaire, et
- dans lequel, pour produire le mélange liquide-air (4), qui présente des bulles d'air entourées de liquide, l'air peut être fourni à la tuyère centrale ainsi qu'à la tuyère annulaire (11) et le liquide peut être introduit entre la tuyère centrale et la tuyère annulaire (11).

14. Dispositif à tuyère selon l'une quelconque des revendications 10 à 13, **caractérisé en ce que**
- un canal d'écoulement précède la tuyère de Laval (3), et
- il est prévu une ouverture de dérivation (15) entre le canal d'écoulement et la tuyère de Laval (3).

15. Dispositif à tuyère selon la revendication 14, **caractérisé en ce que** l'ouverture de dérivation (15) a la forme d'un canal annulaire, qui entoure l'ouverture de la tuyère de Laval (3).

16. Tuyère selon la revendication 14 ou 15, **caractérisée en ce que** l'ouverture de dérivation (15) peut être fermée de façon réglable.

17. Dispositif à tuyère selon l'une quelconque des revendications 10 à 16, **caractérisé en ce qu'**il est prévu, à l'endroit de la section transversale d'écoulement la plus étroite de la tuyère de Laval (3), un dispositif de soupape d'échappement (16) qui influence la pression statique à l'intérieur du mélange liquide-air (4) traversant la tuyère de Laval (3), à cet endroit de la tuyère de L'aval.
